(19) Europäisches Patentamt
European Patent Office
Office européen des brevets

(11) EP 2 697 237 B1

(12) # EUROPÄISCHE PATENTSCHRIFT

(45) Veröffentlichungstag und Bekanntmachung des Hinweises auf die Patenterteilung:
**02.03.2016 Patentblatt 2016/09**

(21) Anmeldenummer: **12713876.6**

(22) Anmeldetag: **19.03.2012**

(51) Int Cl.:
***C07F 9/12*** (2006.01) ***C09K 19/40*** (2006.01)
***C09K 19/12*** (2006.01) ***C09K 19/18*** (2006.01)
***C09K 19/32*** (2006.01) ***G02F 1/139*** (2006.01)
***G02F 1/13363*** (2006.01) ***C09K 19/04*** (2006.01)

(86) Internationale Anmeldenummer:
**PCT/EP2012/001203**

(87) Internationale Veröffentlichungsnummer:
**WO 2012/139698 (18.10.2012 Gazette 2012/42)**

(54) **WEICHMACHER UND OPTISCHE FILME**
PLASTICIZERS AND OPTICAL FILMS
PLASTIFIANT ET FILMS OPTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2011 DE 102011017159**

(43) Veröffentlichungstag der Anmeldung:
**19.02.2014 Patentblatt 2014/08**

(73) Patentinhaber: **Merck Patent GmbH**
**64293 Darmstadt (DE)**

(72) Erfinder:
- **FIEBRANZ, Bernd**
  **64839 Muenster (DE)**
- **RIEGER, Bernhard**
  **64839 Muenster (DE)**
- **PAULUTH, Detlef**
  **64372 Ober-Ramstadt (DE)**
- **LIETZAU, Lars**
  **64295 Darmstadt (DE)**

(56) Entgegenhaltungen:
**EP-A2- 0 463 467 JP-A- 3 190 889**
**JP-A- 3 204 888**

- **CHOPA A B ET AL: "Strategies for the synthesis of bi- and triarylic materials starting from commercially available phenols", JOURNAL OF ORGANOMETALLIC CHEMISTRY, ELSEVIER-SEQUOIA S.A. LAUSANNE, CH, Bd. 690, Nr. 17, 1. September 2005 (2005-09-01), Seiten 3865-3877, XP027708895, ISSN: 0022-328X [gefunden am 2005-09-01]**
- **DATABASE REAXYS [Online] Elsevier; 2002, Menger, Azov: "Synthesis and Properties of Water-Soluble Asterisk Molecules", XP002678697, Database accession no. 9249968, 9251134, 9251513 & Fredric M. Menger ET AL: "Synthesis and Properties of Water-Soluble Asterisk Molecules", Journal of the American Chemical Society, Bd. 124, Nr. 37, 1. September 2002 (2002-09-01), Seiten 11159-11166, XP55031199, ISSN: 0002-7863, DOI: 10.1021/ja0206238**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Weichmacher-Substanzen (organische Phosphorsäureester) mit vorteilhaften optischen Eigenschaften und optische Filme, insbesondere Schutzfolien für Polarisatorfilme und optische Kompensationsfolien für Flüssigkristallanzeigen, welche mindestens eine solche Substanz enthalten. Die Erfindung betrifft weiterhin Flüssigkristallanzeigen, welche Kompensationsfolien der genannten Art aufweisen, Verfahren zur Herstellung der optischen Filme, Kompensationsfolien, Polarisatorfilme und Flüssigkristallanzeigen, die Verwendung der nachfolgend beschriebenen Weichmacher als Zusätze zu optischen Filmen und Kompensationsfolien für Flüssigkristallanzeigen, und weitere unten ersichtliche Erfindungsgegenstände.

Generell werden organische Phosphate bei der Kunststoffherstellung eingesetzt. Die Druckschrift EP 463467 beschreibt bereits solche Phosphate. Sie finden häufig Anwendung in der Herstellung von Thermoplasten (PVC). Triphenylphosphat wird bekanntermaßen auch als Weichmacher für Celluloseacetatfilme (TAC) verwendet.

In der Druckschrift WO 2007/023430 werden Terphenylverbindungen mit beliebigen Substituenten für die Verwendung in medizinischen Diagnoseverfahren definiert. Terphenylphosphate gemäß der vorliegenden Erfindung sind bisher unbekannt.

Für die Verbesserung der Blickwinkelabhängigkeit des Kontrastes und die Verminderung der Farbverschiebung unter höheren Betrachtungswinkeln werden bei LCDs ('liquid crystal displays') optische Kompensationsfilme zwischen den Polarisatorfolien und der LC-Zelle eingesetzt. Diese Folien haben spezifische optische Retardationseigenschaften und sind auf die jeweilige LCD-Technologie (TN, VA, IPS, etc) abgestimmt. Bekannt sind Kompensationsfilme basierend auf orientierten Schichten von reaktiven (d.h. polymerisierbaren) Mesogenen (RMs), die auf einer Trägerfolie (in der Regel aus TAC = Triacetylzellulose) aufgebracht sind, welche dann auf die Polarisationsfolie laminiert werden. Weiterhin werden diskotische Moleküle direkt in den TAC-Film eingebracht und durch Reckung des TAC-Films eine bestimmte optische Retardationswirkung erreicht. Diese TAC-Filme werden direkt als TAC-Schutzfolie für den Polarisator verwendet, der typischerweise aus einer mit Jod getränkten und gereckten PVA-Folie und zwei TAC-Schutzfolien besteht. Stäbchenförmige Moleküle für den Einsatz in TAC-basierten optischen Filmen werden auch in der Druckschrift US 6,778,242 erwähnt, wobei diese mindestens zwei aromatische Ringsysteme enthalten.

Im nachfolgenden wird für Flüssigkristallanzeigen auch der Begriff "LCD" (Liquid Crystal Display) verwendet. LCDs sind dem Fachmann bekannt. Handelsübliche TV-Geräte, Desktop-Monitore oder Laptops bzw. Notebooks enthalten üblicherweise einen Bildschirm auf Grundlage der Flüssigkristalltechnik. Hintergrundlicht wird dabei durch einen Polarisationsfilter linear polarisiert, passiert eine Flüssigkristallschicht, die, z.B. in Abhängigkeit von der gewünschten Helligkeit, die Polarisationsebene des Lichtes dreht, und tritt durch einen zweiten Polarisationsfilter wieder aus. Zusammen mit Treiberelektronik, Farbfiltern und Glasscheiben bilden diese Komponenten das sogenannte "Panel".

TFT (Thin Film Transistor) bezeichnet die heute bei Desktop-Monitoren und Notebooks übliche Aktivmatrix-Variante der LCD-Panels, bei der jedes Pixel durch einen eigenen Transistor angesteuert wird. Im Unterschied dazu besitzen Passivmatrix-Displays nur am Rand Steuerelektronik, die einzelnen Pixel werden zeilen- und spaltenweise geschaltet. Sie sind deshalb deutlich träger im Bildaufbau und werden wegen ihres geringeren Stromverbrauchs vornehmlich in Kleingeräten wie Mobiltelefonen, tragbaren digitalen Videogeräten oder MP3-Playern eingesetzt. Die Begriffe LCD- und TFT-Monitor werden, obwohl streng genommen unterschiedlich, mittlerweile oft synonym verwendet.

Die Paneltypen unterscheiden sich im Wesentlichen durch die Art der Ausrichtung der Flüssigkristalle zwischen den Substraten der Flüssigkristallzelle. In TN-Panels (Twisted Nematic) sind die Flüssigkristallmoleküle ohne elektrisches Feld parallel zur Oberfläche der Substrate ausgerichtet, wobei ihre Vorzugsrichtung in Richtung senkrecht zur Oberfläche eine helikale Verdrillung aufweist, und richten sich bei angelegter Spannung in Richtung des senkrecht zur Oberfläche anliegenden elektrischen Feldes aus. Beim In-Plane Switching (IPS) sind die Flüssigkristallmoleküle parallel zur Substratoberfläche, aber unverdrillt, ausgerichtet.

Die Flüssigkristallmoleküle in VA-Panels (Vertically Aligned) sind im feldlosen Zustand weitgehend senkrecht zur Substratoberfläche ausgerichtet, und besitzen eine negative dielektrische Anisotropie, so dass sie beim Anlegen des elektrischen Feldes zwischen den Substraten in eine Richtung parallel zur Oberfläche umorientiert werden. Da VA-Panels ohne angelegte Spannung kein Licht durchlassen, erreichen sie ein tiefes Schwarz und damit sehr hohe Kontrastwerte. VA-Panels zeichnen sich insbesondere durch kurze Umschaltzeiten aus, so dass sie und ihre Herstellung im Rahmen der Erfindung bevorzugt sind.

Den meisten Displays ist gemeinsam, dass sie zur Erhöhung des Betrachtungswinkels mindestens eine optische Kompensationsfolie aufweisen.

Diese kann beispielsweise aus einem Zelluloseacylat, insbesondere einem Zellulose-$C_1$-$C_7$-alkanoat (Z-$C_1$-$C_7$-A), z.B. Zelluloseacetat und/oder -propionat (z.B. CAP) oder vorzugsweise Zelluloseacetat (Triacetyl-Zellulose, TAC) als Basis bestehen. Normalerweise ist eine Zelluloseacylat-Folie optisch isotrop in Bezug auf die senkrechte Achse zur Folienfläche (mit relativ geringer Retardation). Um als optische Kompensationsfolie dienen zu können, muss sie jedoch optische Anisotropie und vorzugsweise eine hohe Retardation (= optische Verzögerung) zeigen. Neben gereckten doppelbrechenden synthetischen Polymermaterialien wurden auch anisotrope Schichten, die diskotische Moleküle beinhalten, vorgeschlagen, die durch Ausrichten der diskotischen Moleküle und anschließende Fixierung in der ausgerichteten Form hergestellt werden. US 6,559,912 und US 2003/0218709 beschreiben Zelluloseacetatfolien mit diskotischen Molekülen z.B. auf 1,3,5-Triazinbasis oder mit Flüssigkristallen mit polymerisierbaren Resten.

US 6,778,242 beschreibt Kompensationsfolien auf der Basis von TAC-Filmen enthaltend kalamitische oder diskotische Flüssigkristallmoleküle, welche mindestens zwei aromatische Ringsysteme enthalten. EP 2218763 A2 beschreibt Kompensationsfolien, die Verbindungen mit zwei oder mehr Ringen und nur einem aromatischen Ring enthalten. Es werden mit einigen Substanzen gute Retardationseigenschaften und ausreichende Stabilität gefunden. Die Konzentration dieser Materialien im TAC-Film ist aber begrenzt. Daher ist für bestimmte Anwendungen, bei denen höhere Retardationen gewünscht sind (oder auch für dünnere Filme), die optische Wirkung dieser LC-Materialien nicht ausreichend.

Eine andere Problemstellung ist die Veränderung der Retardationseigenschaften der TAC Schutzfolie bei der Reduzierung der Foliendicke, wobei die Retardation des Films für die Displayanwendung konstant gehalten werden soll. Da sich die Retardation (speziell der Rth Wert der Folie) proportional zu der Foliendicke verändert, reduziert sich dieser Wert bei dünneren Folien. Diese Änderung kann mit den erfindungsgemäßen Weichmachern ausgeglichen werden, und ein bestimmter Rth Wert kann somit eingestellt werden.

Auch gibt es, wie oben bereits angedeutet, eine Fülle von unterschiedlichen LCD-Systemen, so dass es schwierig sein kann, Folien an die gewünschten Bedingungen anzupassen. So ist denkbar, dass nur eine Folie zur Kompensation verwendet wird, oder zwei oder mehr, und dass je nach Dicke und anderen Erfordernissen die Eigenschaften wie Dicke und Masse etc. der Kompensationsfolie(n) an bestimmte Anforderungen eines LCD anpassbar sein müssen.

Die optische Verzögerung (Retardation) der optischen Kompensationsfolie Ro in Richtung der Folienebene (sogenannte "in plane" Retardation; oft auch als Re bezeichnet) und Rth in Richtung der Foliendicke (sogenannte "out of plane" Retardation) sind dem Fachmann geläufig und werden unten definiert.

Die Einstellung der geeigneten Werte für Ro und Rth hängt vom jeweils verwendeten Typ der Flüssigkristallzelle und der dadurch bewirkten Änderung des Polarisationszustandes bei der Ansteuerung der Zelle ab.

Unterschiedliche Retardationswerte zur Korrektur werden für die üblichen Typen der Anzeigen der Bilddarstellung wie z.B. TN (twisted nematic), STN (super twisted nematic), VA (vertically aligned), IPS (in plane switching) benötigt.

Weiterhin hat sich gezeigt, dass die im Stand der Technik vorgeschlagenen TAC-Filme oft eine unzureichende Dispersion (Abhängigkeit der Doppelbrechung bzw. Retardation von der Wellenlänge des Lichts) aufweisen, was, insbesondere bei VA-LCDs, zu einer Verschlechterung des Kontrastes vor allem bei großen Blickwinkeln (d.h. bei großer Abweichung von der Blickrichtung senkrecht auf die Anzeige) führt.

Angesichts der oben genannten Schwierigkeiten besteht die Aufgabe, Kompensationsfolien zu finden, welche eine genaue Einstellung der Retardationswerte Ro (= Re) und Rth ermöglichen und eine hohe Dauerhaftigkeit dieser Werte aufweisen, bei denen die verwendeten Zusätze sowohl während der Herstellung als auch im Endprodukt eine gute Verträglichkeit aufweisen und keine Färbung oder Trübung hervorrufen, und mit denen die erforderlichen optischen Eigenschaften durch geeignete Maßnahmen wie Recken flexibel auf gewünschte Displays eingestellt werden können, beispielsweise hinsichtlich der verwendbaren Dicke und der Frage, ob anstelle von zwei Kompensationsfolien nur eine eingesetzt werden kann. Wenn die verwendeten Substanzen über einen großen Konzentrationsbereich verträglich sind, können die Retardationswerte sowohl über die Konzentration der verwendeten Zusätze als auch durch speziell angepasste Nachbehandlung variiert werden, was eine große Flexibilität für den Anwendungsfall ergäbe.

Weiterhin sollten die Kompensationsfolien eine angepasste optische Dispersion aufweisen, und, insbesondere bei VA-LCDs, einen hohen Kontrast auch bei großen Blickwinkeln ermöglichen.

Es wurde nun gefunden, dass es durch Verwendung bestimmter Verbindungen möglich ist, ein bis alle der in der Aufgabenstellung angegebenen Ziele zu erreichen.

Im Rahmen der vorliegenden Erfindung werden spezielle Weichmacher-Materialien basierend auf Phosphorsäureestern (vgl. Formel I) entwickelt, die eine höhere Retardation im Vergleich zu den Standard-Weichmachern (wie z.B. TPP, Tri-Phenyl-Phosphat) bieten. Sie besitzen hervorragende Eigenschaften als Weichmacher. Darüber hinaus erzielen sie eine optische Wirkung als Hilfsmittel für die Einstellung der Retardationswerte und/oder der optischen Dispersion.

Durch die Kombination dieser Effekte in einem einzigen Additiv lassen sich die erwünschten Effekte mit einer geringeren Gesamtkonzentration an Additiven einstellen. Anders ausgedrückt lassen sich mit einer gleichbleibenden Additivkonzentration ausgeprägtere Effekte bei den erwünschten Eigenschaften (Weichheit, optische Retardation/Dispersion, etc.) erzielen.

Damit kann die weichmachende Wirkung mit einer Retardationserhöhung kombiniert und die Kompensationseigenschaft des Retardationsfilmes angepasst werden. Durch Ersatz und/oder Kombination mit den für Kompensationsfilmen bereits entwickelten Materialien (z.B. flüssigkristalline Materialien) lassen sich damit dünnere und/oder höher brechende Kompensationsfilme herstellen.

Natürlich können die erfindungsgemäßen Substanzen auch eingesetzt werden, um z.B. in einem Polymerfilm eine gewisse Retardationseigenschaft zu erhalten, wie z.B. die Einstellung des Rth Wertes eines herkömmlichen TAC

Films. Dabei werden die Materialien in geringeren Konzentrationen eingesetzt.

Durch Reckung des Films ist es auch möglich, eine sogenannte "In-plane Retardation" (Ro) im Film zu induzieren, die für einige Anwendungen erwünscht ist, um eine optimale optische Kompensation zu erreichen.

Insbesondere wurde gefunden, dass sich die erfindungsgemäßen Weichmacher besonders gut als Zusätze für TAC Filme zur Verwendung in Kompensationsfolien eignen. Es wurde gefunden, dass diese Verbindungen sehr gute Retardationseigenschaften und ausreichende Stabilität (Temperatur/Feuchte Lagertest) zeigen. Sie eignen sich gleichzeitig ausgezeichnet als Weichmacher.

Weiterhin wurde gefunden, dass diese Verbindungen bei Verwendung in TAC-Filmen eine Änderung der wellenlängenabhängigen Dispersion der Retardation zeigen. Damit kann eine angepasste Dispersion des TAC-Films bzw. der Kompensationsfolie erreicht werden, was zu einer Erhöhung des winkelabhängigen Kontrastes für die VA-LCDs beitragen kann.

Phosphorsäureester werden bereits in den Druckschriften JP03204888 A (Liquid crystal compound and liquid crystal composition containing same compound) und JP03190889 A (Phosphoric acid ester compound and liquid crystal composition containing the same) offenbart.

Ein erster Gegenstand der Erfindung sind die Verbindungen der Formel 1:

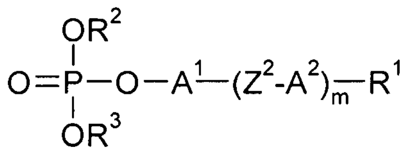

I

worin

| | |
|---|---|
| $A^1$ und $A^2$ | jeweils unabhängig voneinander einen Rest ausgewählt aus aromatischen oder heteroaromatischen Ringsystemen mit 5 bis 14, vorzugsweise 5 bis 10 Ringatomen, welche auch ein- oder mehrfach durch L substituiert sein können, |
| L | bei jedem Auftreten gleich oder verschieden OH, $CH_2OH$, F, Cl, Br, I, -CN, $-NO_2$, -NCO, -NCS, -OCN, -SCN, $SF_5$, $-C(=O)N(R^0)_2$, $-C(=O)Y^1$, $-C(=O)R^0$, $-N(R^0)_2$, optional substituiertes Silyl, geradkettiges oder verzweigtes Alkyl oder Alkoxy mit 1 bis 25 C-Atomen, oder geradkettiges oder verzweigtes Alkenyl, Alkinyl, Alkylcarbonyl, Alkoxycarbonyl, Alkylcarbonyloxy oder Alkoxycarbonyloxy mit 2 bis 25 C-Atomen bedeutet, worin in allen diesen Gruppen auch ein oder mehrere H-Atome durch F, Cl oder CN ersetzt sein können, und $Y^1$ Halogen bedeutet, |
| $R^1$ | unabhängig voneinander H, geradkettiges oder verzweigtes Alkyl oder Alkoxy mit 1 bis 12 C-Atomen, worin auch eine oder mehrere $CH_2$-Gruppen durch -O-, -S-, -(CO)-, -(CO)O-, -O(CO)-, -O(CO)O-, -CH=CH-, -C≡C-, $-NR^0-$, $-(CO)NR^0-$, $-NR^0(CO)-$ so ersetzt sein können, dass O- und/oder S-Atome nicht direkt miteinander verknüpft sind, und worin auch ein oder mehrere H-Atome durch F, Cl oder CN ersetzt sein können, |
| $R^0$ | H oder $C_1$-$C_7$-Alkyl, |
| $R^2$ und $R^3$ | einen Rest $-A^1-R^1$ bedeuten, |
| $Z^2$ | -C≡C- oder eine Einfachbindung, und |
| m | 2, 3 oder 4, für $Z^2$ = -C≡C- auch m = 1 |

bedeuten.

Bevorzugte Reste $A^1/A^2$ sind ausgewählt aus der Gruppe bestehend aus 1,4-Phenylen, worin auch eine oder mehrere CH-Gruppen durch N ersetzt sein können 1,2-Phenylen, worin auch eine oder mehrere CH-Gruppen durch N ersetzt sein können ("Sechsring-N-Heteroaromaten"), 2,6-Naphthylen, 1,4-Naphthylen, Anthracen-2,6-diyl, Fluoren-2,7-diyl, Pyrrol-2,5-diyl, Furan-2,5-diyl, Thiophen-2,5-diyl, Imidazol-2,5-diyl, 1,3-Oxazol-2,5-diyl, 1,3-Thiazol-2,5-diyl, Pyrazol-3,5-diyl, Isoxazol-3,5-diyl und Isothiazol-3,5-diyl, wobei alle diese Reste unsubstituiert oder durch L ein- oder mehrfach substituiert sein können. Besonders bevorzugt Reste $A^1/A^2$ sind 1,4-Phenylen, 1,2-Phenylen und 2,6-Naphthylen.

In den Verbindungen der Formel I und deren Unterformeln bedeutet $R^1$ bei jedem Auftreten jeweils unabhängig voneinander vorzugsweise H, geradkettiges Alkyl oder Alkoxy mit 1 bis 7 C-Atomen oder geradkettiges Alkenyl mit 2

bis 6 C-Atomen. $R^1$ bedeutet besonders bevorzugt H, $CH_3$, $C_2H_5$, n-$C_3H_7$, n-$C_4H_9$, n-$C_5H_n$, $OCH_3$ oder $OC_2H_5$.

$R^2$ und $R^3$ bedeuten bevorzugt substituiertes oder unsubstituiertes Phenyl.

In Formel I bedeutet der Zähler m bevorzugt 2 oder 3, besonders bevorzugt 2.

Ferner bevorzugt sind Verbindungen der Formel I und deren Unterformeln, worin $R^1$ für $R^4$-$Z^4$- steht, wobei $R^4$ jeweils unabhängig voneinander Alkyl oder Alkoxy mit 1 bis 12, vorzugsweise mit 1 bis 7 C-Atomen bedeuten, und $Z^4$ jeweils unabhängig voneinander -(CO)-, -(CO)O-, -O(CO)-, -(CO)$NR^0$- oder -$NR^0$(CO)- bedeuten. $Z^4$ bedeutet vorzugsweise -(CO)O- oder -O(CO)-.

$Z^1$ in Formel I bedeutet vorzugsweise eine Einfachbindung, -C≡C-, -(CO)O- oder -O(CO)-, besonders bevorzugt eine Einfachbindung oder -C≡C-.

Ein weiterer Gegenstand der Erfindung ist somit ein optischer Film, vorzugsweise eine optische Kompensationsfolie oder eine Schutzfolie für einen Polarisator, vorzugsweise für Flüssigkristallanzeigen, auf Zelluloseacylat-Basis, insbesondere auf CAP- oder vorzugsweise TAC-Basis, dadurch gekennzeichnet, dass er eine oder mehrere erfindungsgemäße Verbindungen der Formel I beinhaltet.

Ein weiterer Gegenstand der Erfindung ist ein Verfahren zur Herstellung eines optischen Films, vorzugsweise einer optischen Kompensationsfolie, vorzugsweise für Flüssigkristallanzeigen, die eine oder mehrere Verbindungen der Formel I beinhaltet, wobei diese Verbindungen während der Herstellung mit den Ausgangsmaterialien für die Kompensationsfolie vermischt werden und zu einem Film geformt werden. Für bestimmte Anwendungen wird die Folie vorzugsweise in einem anschließenden Schritt mindestens in einer, beispielsweise in einer bis drei Richtungen (x, y und z, beispielsweise in z-Richtung mittels anschließend zu verwerfender Schrumpffolien), vorzugsweise in zwei Richtungen gereckt.

Ein weiterer Gegenstand der Erfindung ist ein Polarisator, bevorzugt ein Polarisationsfilm, vorzugsweise für Flüssigkristallanzeigen, welcher ein Paar transparente Schutzfilme und eine polarisierende Membran zwischen den Schutzfilmen beinhaltet, wobei mindestens einer der transparenten Schutzfilme eine oder mehrere Verbindungen der Formel I beinhaltet, sowie ein Verfahren zu deren Herstellung. Der Schutzfilm basiert vorzugeweise auf Zelluloseacylat.

Ein weiterer Gegenstand der Erfindung ist eine Flüssigkristallanzeige, die mindestens einen optischen Film, bevorzugt eine optische Kompensationsfolie, aufweist, die eine oder mehrere Verbindungen der Formel I beinhaltet, sowie ein Verfahren zu deren Herstellung.

Ein weiterer Gegenstand der Erfindung ist die Verwendung einer oder mehrerer Verbindungen der Formel I als Additiv zur Herstellung von optischen Kompensationsfolien für Flüssigkristallanzeigen. Vorzugsweise wird dabei mindestens eine dieser Verbindungen bei der Herstellung der Kompensationsfolie zugesetzt und vorzugsweise in einem weiteren Schritt die Kompensationsfolie dann zur Herstellung einer Flüssigkristallanzeige verwendet.

Die vor- und nachstehend verwendeten allgemeinen Ausdrücke und Symbole haben, soweit nicht anders angegeben, soweit sie nicht bereits vorstehend auch in der Einleitung bereits definiert sind, vorzugsweise die vorstehend oder nachfolgend genannten Bedeutungen, wobei für jeden Erfindungsgegenstand, unabhängig von den anderen, einer, mehrere oder alle allgemeineren Ausdrücke oder Symbole durch nachfolgend genannte spezifischere Definitionen ersetzt werden können, was jeweils zu bevorzugten Ausführungsformen der Erfindung führt.

Die erfindungsgemäßen Kompensationsfolien zeigen optische Anisotropie, d.h. unterschiedliche Brechungsindices n in mindestens zwei der Raumrichtungen x, y und z. Die Doppelbrechung der optischen Kompensationsfolie $\Delta n_o$ in Richtung der Folienebene und $\Delta n_{th}$ in Richtung der Foliendicke werden durch die folgenden Formeln beschrieben:

$$\Delta n_o\ (= \Delta n_e) = (nx - ny) \qquad \text{(I)}$$

$$\Delta n_{th} = \{\ nz - [(nx + ny)/2]\ \} \qquad \text{(II)}$$

Dabei ist nx der Brechungsindex entlang der langsamen Achse in der Ebene der Folie (d.h. derjenigen Achse mit dem größten Brechungsindex, d.h. derjenigen Schwingungsrichtung, in der eine Welle die langsamere Ausbreitungsgeschwindigkeit hat); ny ist der Brechungsindex entlang der schnellen Achse (d.h. derjenigen Achse mit dem geringsten Brechungsindex, d.h. derjenigen Schwingungsrichtung, in der eine Welle die schnellere Ausbreitungsgeschwindigkeit hat) in der Ebene der Folie senkrecht zu nx; nz ist der Brechungsindex in Richtung der Foliendicke (d.h. senkrecht zu nx und ny).

Die optische Verzögerung R (Retardation) einer Kompensationsfolie ist definiert als das Produkt aus Doppelbrechung $\Delta n$ und Schichtdicke d gemäß folgender Formel:

$$R = \Delta n \times d \qquad \text{(III)}$$

Somit ergibt sich die Retardation der optischen Kompensationsfolie Ro in Richtung der Folienebene ("in plane" Retardation) bzw. Rth in Richtung der Foliendicke ("out of plane" Retardation) gemäß den folgenden Formeln:

$$Ro\ (= Re) = (nx - ny) \times d \qquad (IV)$$

$$Rth = \{\ nz - [(nx + ny)/2]\ \} \times d \qquad (V)$$

wobei d die Dicke der Folie bezeichnet.

Der Brechungsindex, die Doppelbrechung und die optische Retardation ändern sich üblicherweise in Abhängigkeit von der Wellenlänge des Lichtes. Diese Abhängigkeit wird auch als (optische) Dispersion bezeichnet. Die meisten optischen Medien zeigen eine Abnahme des Brechungsindex mit zunehmender Wellenlänge (normale Dispersion). Einige optische Medien zeigen dagegen eine Zunahme des Brechungsindex mit zunehmender Wellenlänge (ano(r)male Dispersion). Vor- und nachstehend bezeichnet der Begriff "negative (optische) Dispersion" ein Material bzw. eine Folie mit anormaler Dispersion, worin der Absolutwert der Doppelbrechung ($\Delta n$) mit zunehmender Wellenlänge ($\lambda$) zunimmt, z.B. $|\Delta n(450)| < |\Delta n(550)|$ und $\Delta n(450)/\Delta n(550) < 1$, wobei $\Delta n(450)$ und $\Delta n(550)$ die Doppelbrechung bei einer Wellenlänge von 450nm bzw. 550nm bedeuten. Der Begriff "positive (optische) Dispersion" bezeichnet ein Material bzw. eine Folie mit normaler Dispersion, worin der Absolutwert der Doppelbrechung ($\Delta n$) mit zunehmender Wellenlänge ($\lambda$) abnimmt, z.B. $|\Delta n(450)| > |\Delta n(550)|$ und $\Delta n(450)/\Delta n(550) > 1$. Siehe auch A. Uchiyama, T. Yatabe "Control of Wavelength Dispersion of Birefringence for Oriented Copolycarbonate Films Containing Positive and Negative Birefringent Units". J. Appl. Phys. Vol. 42 pp 6941-6945 (2003).

Da die optische Retardation bei einer bestimmten Wellenlänge direkt proportional zur Schichtdicke ist, kann die optische Dispersion entweder als Dispersion der Doppelbrechung, z.B. durch das Verhältnis $\Delta n(450)/\Delta n(550)$, oder als Dispersion der Retardation ("Retardationsdispersion"), z.B. durch das Verhältnis R(450)/R(550), angegeben werden, wobei R(450) und R(550) die Retardation bei einer Wellenlänge von 450nm bzw. 550nm bedeuten.

Da die Schichtdicke sich nicht mit der Wellenlänge ändert, ist in einem Material oder einer Folie mit negativer bzw. anormaler Dispersion, analog zur Doppelbrechung, auch $R(450)/R(550) < 1$ und $|R(450)| < |R(550)|$, und in einem Material oder einer Folie mit positiver oder normaler Dispersion $R(450)/R(550) > 1$ und $|R(450)| > |R(550)|$. Dies gilt gleichermassen für die Retardationswerte Ro und Rth.

Die Retardation $R(\lambda)$ eines optischen Films kann mit einem Müller Matrix Polarimeter System bestimmt werden, z.B. unter Verwendung eines AxoScan Polarimeters von Axometrics,Inc. Damit kann die optische Verzögerung einer doppelbrechenden Probe (in nm) über einen bestimmten Wellenlängenbereich, typischerweise 400 nm bis 700 nm, gemessen werden. Aus diesen Werten kann die Dispersion (R(450)/R(550)) berechnet werden.

Die vor- und nachstehend angegebenen Retardationswerte wurden, falls nicht anders angegeben, mit einem AxoScan Polarimeter gemessen.

Die vor- und nachstehend angegebenen Werte für die Retardation R, den Brechungsindex n und die Doppelbrechung $\Delta n$ beziehen sich, falls nicht anders angegeben, auf eine Wellenlänge von 550 nm (gemessen bei Raumtemperatur).

Optische Kompensationsfolien werden nachfolgend auch nur als "Kompensationsfolien" bezeichnet. Erfindungsgemäß bevorzugt sind optische Kompensationsfolien auf Zelluloseacylat-Basis, insbesondere auf CAP- oder vorzugsweise Zelluloseacetatbasis.

Zelluloseacylat bedeutet insbesondere ein Zellulosetriacylat, wobei die Acylreste gleich oder (insbesondere statistisch) unterschiedlich sein können, vorzugsweise ein entsprechendes Zellulose-tri-$C_1$-$C_7$-alkanoat, vorzugsweise -tri-$C_1$-$C_4$alkanoat, wie -butyrat, -propionat und/oder -acetat, wie insbesondere CAP (Celluloseacetopropionat) oder TAC (Cellulosetriacetat oder Triacetylcellulose).

Der Grad der Acyl-Substitution (DS), der Essigsäuregehalt und die Polymolekularität (das Verhältnis von Gewichtsmittel zu Zahlenmittel) des Zelluloseacylats bzw. des TAC sind wie in der EP 2218763 A definiert und liegen vorzugsweise in den dort angegebenen Bereichen.

Eine erfindungsgemäße Kompensationsfolie ist vorzugsweise eine gereckte, insbesondere in zwei Richtungen (biaxial) gereckte Folie, deren Dicke, Reckungsparameter und Gehalt an Verbindungen der Formel I wie vor- und nachstehend definiert so ausgewählt sind, dass sie die unten als bevorzugt dargelegten Retardationswerte Ro (=Re) und Rth hat.

Vorzugsweise weist eine erfindungsgemäße Kompensationsfolie oder eine erfindungsgemäße Schutzfolie eines Polarisators einen Gehalt von 0,1 bis 20 Gewichtsprozent, insbesondere von 1 bis 15 Gewichtsprozent, noch stärker bevorzugt von 2 bis 10 Gewichtsprozent, bezogen jeweils auf das Gesamtgewicht der Kompensationsfolie, an erfindungsgemäßen Verbindungen der Formel I.

"Gewicht" (z.B. in Gewichtsprozent oder Gew.-%) ist in dieser Offenbarung gleichbedeutend mit Masse.

Besonders bevorzugte Verbindungen der Formel I sind ausgewählt aus den folgenden Unterformeln:

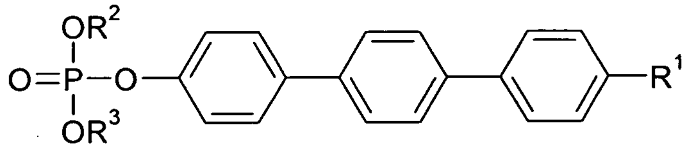

I1

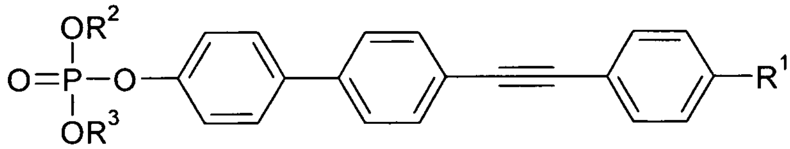

I2

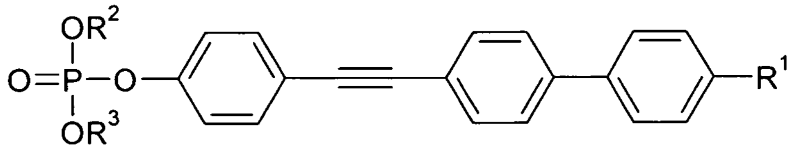

I3

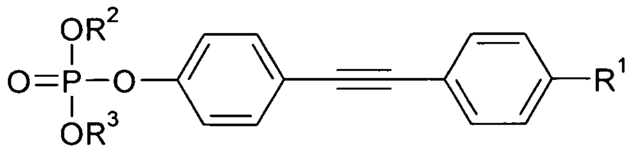

I4

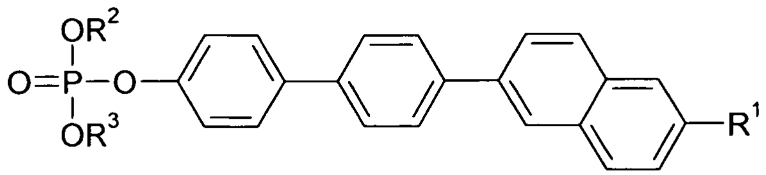

I5

worin $R^1$, $R^2$ und $R^3$ die in Formel I angegebenen Bedeutungen besitzen, und die Ringe durch einen oder mehrere Substituenten L jeweils unabhängig voneinander substituiert sein können.

Ganz besonders bevorzugt sind Verbindungen ausgewählt aus den folgenden Unterformeln:

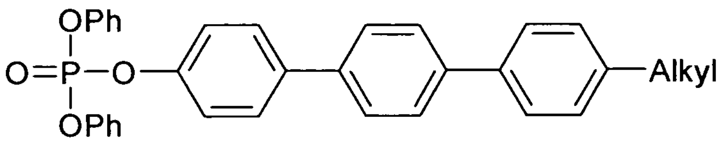

I1a

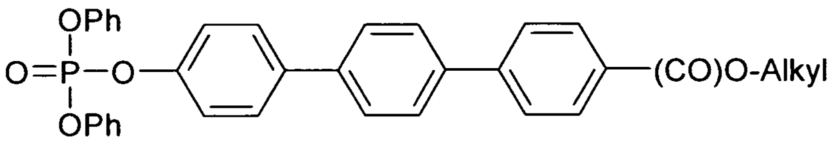

I1b

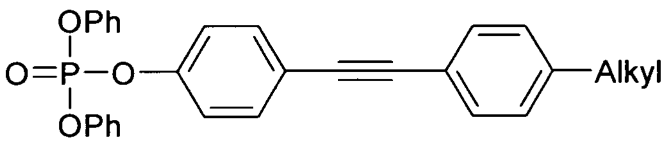

I1c

worin Ph für Phenyl, Alkyl und Alkyl* jeweils unabhängig voneinander einen geradkettigen Alkylrest mit 1, 2, 3, 4, 5 oder 6 C-Atomen bedeuten.

"Beinhalten" oder "umfassen" oder "aufweisen" bedeutet, dass neben den aufgezählten Merkmalen und/ oder Bestandteilen noch weitere Merkmale, Verfahrensschritte und/oder Bestandteile vorhanden sein können, d.h. eine nicht abschließende Aufzählung vorliegt. Im Unterschied hierzu bedeutet "enthalten", dass bei der so charakterisierten Ausführungsform nur die genannten Merkmale, Verfahrensschritte und/oder Bestandteile gegeben sind.

Die Verbindungen der Formel I und deren Unterformeln können nach an sich bekannten Methoden dargestellt werden, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Phosphorsäureester werden in der Regel aus der Reaktion von entsprechenden Chlorophosphaten mit dem gewünschten Alkohol hergestellt. Die Chlorophosphate für gemischte Ester sind in der Regel literaturbekannt oder in Analogie herstellbar. Einige sind kommerziell erhältlich.

In einer weiteren bevorzugten Ausführungsform der Erfindung wird nur eine (d.h. genau eine) Kompensationsfolie pro Flüssigkristallzelle bzw. Flüssigkristalldisplay eingesetzt.

In einer weiteren bevorzugten Ausführungsform der Erfindung werden zwei, oder mehr als zwei, Kompensationsfolien pro Flüssigkristallzelle bzw. Flüssigkristalldisplay eingesetzt.

Im letzteren Falle wird die erfindungsgemäße Kompensationsfolie vorzugsweise für die Kompensation einer VA-Flüssigkristallanzeige (vertically aligned) eingesetzt. Danach liegt bei zwei verwendeten Kompensationsfolien der Bereich der Retardation für jede der Folien von Ro vorzugsweise bei 30 bis 70, insbesondere bei 40 bis 60 nm, der von Rth vorzugsweise bei -100 bis -160, insbesondere von -120 bis -140 nm, im Falle von nur einer Kompensationsfolie für die VA-Anzeige für Ro vorzugsweise bei 30 bis 90, insbesondere 50 bis 70 nm und der von Rth vorzugsweise bei -160 bis -270 nm, insbesondere von -180 bis -250 nm (bevorzugte Retardationswerte, bevorzugte Retardationsbereiche). Für spezielle VA LCD Anwendungen (PM-VA LCDs; passive matrix VA LCDs) können die Werte für Rth auch noch weitaus höher liegen. Typischerweise liegen die Retardationen im Bereich -200 nm bis -400 nm, in besonderen Fällen sind Werte bis -800 nm möglich.

Für die Verwendung in einer TAC Schutzfolie für einen Polarisator liegt die Retardation Ro vorzugsweise bei 0 bis 50 nm, insbesondere bei 0 bis 30 nm, Rth liegt vorzugsweise im Bereich von -30 bis -80 nm, insbesondere von -40 bis -70 nm.

Beim erfindungsgemäßen Verfahren zur Herstellung einer Kompensationsfolie für eine Flüssigkristallanzeige wird beispielsweise in einer bevorzugten Ausführungsform wie folgt vorgegangen:

Diese bevorzugte Ausführungsform der Erfindung betrifft ein Verfahren zur Herstellung von optischen Kompensationsfolien der erfindungsgemäßen Art (wie vor- und nachstehen oder in den Ansprüchen definiert), wobei man mindestens eine Verbindung der Formel I dem bei der Herstellung der Kompensationsfolien verwendeten Gemisch im Rahmen eines üblichen Verfahrens zum Herstellen derartiger Folien zusetzt.

Vorzugsweise werden (in einem Ansatz oder vorzugsweise schrittweise, z.B. unter Verwendung von (beispielsweise unter Rühren oder Dispergieren) vorgefertigten Lösungen von Komponenten, wie dem Celluloseester (Zelluloseacylat), insbesondere CAP- oder vorzugsweise TAC), dem oder den Weichmachern und gegebenenfalls einem oder mehreren Additiven oder deren Vermischung, die Bestandteile der verwendeten Mischung (bei einem Foliengießverfahren in einem Lösungsmittel- oder Lösungsmittelgemisch) zugesetzt, und dann mittels eines üblichen Verfahrens, vorzugsweise des "Solution-Casting-" (= Foliengieß-)Verfahrens, auf einer entsprechenden Foliengieß-Maschine unter kontrolliertem Ausbreiten auf einen geeigneten Untergrund, wie ein Metallband (z.B. aus Stahlfolie), und kontrolliertem Trocknen zu einer Kompensationsfolie gemäß der Erfindung verarbeitet, vorzugsweise nach bekannten Verfahren, wie beispielsweise in der US 2005/0045064 A1 beschrieben, die hier diesbezüglich durch Bezugnahme aufgenommen wird.

Besonders vorteilhaft ist, dass angesichts der guten Löslichkeit der Verbindungen der Formel I in den verwendeten Lösungsmitteln/ Lösungsmittelgemischen die Zugabe dieser Verbindungen auch in Form von (gegenüber der Endkonzentration in erhöhter Konzentration vorliegenden) Konzentraten durchgeführt werden kann - dies ist eine bevorzugte Variante der Herstellung. Beispielsweise kann die Verbindung oder können die Verbindungen der Formel I in einer gegenüber der Endkonzentration um den Faktor 1,05 bis 10, wie 1,3 bis 5, konzentrierten Lösung (die auch weitere Zusätze beinhalten kann) zugesetzt werden, beispielsweise in-line (in die Pumpleitung) unter Verwendung geeigneter Mischer, wie statischer Mischer.

Als Lösungsmittel oder Lösungsmittelgemische kommen vorzugsweise cyclische oder acyclische Ester, Ketone oder Ether mit jeweils 3 bis 12 Kohlenstoffatomen, oder geeignete halogenierte (insbesondere chlorierte) Lösungsmittel in Betracht, wie insbesondere Dichlormethan oder Chloroform, vorzugsweise in einem Gemisch mit einem linearen, verzweigten oder cyclischen Alkohol, insbesondere Methanol, wobei der Alkohol auch fluoriert sein kann. Vorzugsweise wird ein Gemisch aus einem chlorierten Kohlenwasserstoff, wie insbesondere Methylenchlorid, und einem Alkohol, insbesondere Methanol, verwendet. Bei Mischungen von einem der genannten nichtalkoholischen und einem der genannten alkoholischen Lösungsmittel liegt deren Volumenverhältnis vorzugsweise in einem Bereich von 75 zu 25 bis 98 zu 2, beispielsweise bei 90 zu 10 (nichtalkoholisches Lösungsmittel zu alkoholisches Lösungsmittel, v/v).

Vorzugsweise findet anschließend eine Reckung statt, um die Retardation Ro und Rth jeweils gut im bevorzugten Bereich einstellen zu können (und vorzugsweise zugleich die virtuelle Verzerrung zu vermindern). Die Reckung findet dabei monoaxial, ohne oder vorzugsweise mit Halten senkrecht zur Reckungsrichtung, statt, oder vorzugsweise biaxial, um die Verzerrung in allen Richtungen zu vermindern. Die Reckung liegt vorzugsweise im Bereich von 1 bis 100 % (1,01- bis 2-fache Reckung), beispielsweise in einer bevorzugten Ausführungsform der Erfindung im Bereich von 3 bis 40 % (1,03- bis 1,4-fache Reckung), bezogen auf die ursprüngliche Länge bzw. Breite der Kompensationsfolie. Die biaxiale Reckung kann gleichzeitig oder in getrennten Schritten ausgeführt werden. Die vom Band abgezogene Kompensationsfolie wird beispielsweise erst longitudinal und dann lateral gereckt und danach vollständig getrocknet, oder bei nichtkontinuierlicher Produktion der zunächst vollständig getrockneten und aufgewickelten Folie in einem separaten Arbeitsschritt beispielsweise erst longitudinal und dann lateral oder simultan gereckt.

Die Folie wird bei erhöhten Temperaturen gereckt, wobei die Temperatur vorzugsweise im Bereich der Glasübergangstemperatur des Folienmaterials liegen soll. In bestimmten Fällen, beispielsweise bei teilkristallinen Materialien, kann die Recktemperatur auch bis zu 30°C über der Glasübergangstemperatur des Folienmaterials liegen. Die Folie kann unter trockenen Bedingungen gereckt werden. Zum longitudinalen Recken kann die Folie durch Rollen gereckt werden, beispielsweise, indem die Geschwindigkeit des Abziehens langsamer ist als die des Aufrollens, und ohne oder vorzugsweise mit lateraler Haltung (beispielsweise durch Kluppen). Alternativ kann eine separate Reckung in einer Reckungsmaschine vorgenommen werden.

Um eine gute Kombinierbarkeit mit einem Klebemittel für die Laminierung von Polarisator-Schichten (insbesondere auf PVA-Basis) zu erreichen (vor allem verbesserte Adhäsion), wird die erhaltene Schutzfolie vorzugsweise in einem weiteren Schritt teilweise hydrolysiert, um an der Oberfläche die Hydrophilie zu erhöhen, beispielsweise mittels einer wässrigen Base, wie einem Alkalimetallhydroxid, insbesondere KOH oder NaOH, bei Temperaturen im Bereich von 0 bis 80 °C, z.B. bei etwa 50 °C, wobei die Hydrolyse beispielsweise 0,1 bis 10 Minuten, in einer möglichen bevorzugten Variante z.B. 1 bis 3 Minuten, dauern kann. Es folgen ein oder mehrere Waschschritte, z.B. mit Wasser geeigneter Reinheit, und eine Trocknung.

Die Folie kann dann ggfs. nach dem Aufbringen von Klebe- und Schutzschichten und ggf. nach Schneiden in flacher Form oder in aufgerollter Form aufbewahrt werden.

Ein erfindungsgemäßer Polarisatorfilm beinhaltet zwei transparente Schutzfolien und dazwischen eine Polarisatormembran. Eine erfindungsgemäße optische Kompensationsfolie kann als eine der Schutzfolien verwendet werden, oder auf eine der Schutzfolien aufgebracht werden. Eine herkömmliche Zelluloseacylat-, insbesondere Zellulose-$C_1$-$C_7$-Alkanoat-, insbesondere CAP- oder vorzugsweise TAC-Folie kann als die andere Schutzfolie (oder für beide Schutzfolien) verwendet werden.

Als Polarisationsmembran können beispielsweise jodhaltige Polarisationsmembranen, polyen-basierte Polarisationsmembranen oder dichroitische Farbstoffe beinhaltende Polarisationsmembranen verwendet werden. Jodhaltige und die Farbstoffe beinhaltenden Polarisationsmembranen werden für gewöhnlich aus Polyvinylalkohol-Folien hergestellt. Die Transmissionsachse der Polarisatormembran wird im wesentlichen senkrecht zur Reckrichtung der erfindungsgemäßen Folie platziert.

Die langsame Achse der Kompensationsfolie kann im wesentlichen senkrecht oder im wesentlichen parallel zur Transmissionsachse der Polarisatormembran ausgerichtet werden.

Bei der Herstellung des Polarisatorfilms werden die Polarisatormembran und die Schutzfilme (in der Regel) mit einem wässrigen Klebemittel laminiert, wofür die Schutzfilme (von denen ja vorzugsweise direkt einer eine erfindungsgemäße Kompensationsfolie sein kann) vorzugsweise wie oben beschrieben an der Oberfläche verseift werden.

Bei der Herstellung zirkular polarisierender Polarisatorfilme kann eine erfindungsgemäße Kompensationsfolie auch so platziert werden, dass die langsame Achse der Kompensationsfolie im wesentlichen im Winkel von 45 Grad zur Transmissionsachse der Membran ausgerichtet ist (bei "im wesentlichen senkrecht" also abweichend vom rechten Winkel, bei "im wesentlichen parallel" abweichend von 0°).

"Im wesentlichen" bedeutet vorzugsweise, dass ein vorstehend genannter Winkel um 5 Grad, beispielsweise um 4 Grad, insbesondere um 2 Grad, von einem oben genannten Winkel abweichen kann.

Die Dicke einer erfindungsgemäßen optischen Filme, insbesondere einer Kompensationsfolie, liegt vorzugsweise im Bereich von 20 bis 150 $\mu$m, bevorzugt von 30 bis 100 $\mu$m.

Zur Herstellung einer Flüssigkristallanzeige werden nach üblichen Verfahren zwei wie oben hergestellte Polarisationsfilme mit insgesamt ein oder zwei erfindungsgemäßen Kompensationsfolien zur Herstellung von Flüssigkristallanzeigen des Transmissions- oder des Reflektionstyps verwendet. Die erfindungsgemäße(n) Kompensationsfolie(n) wird oder werden dabei zwischen der Flüssigkristallzelle und einer oder den beiden Polarisatorfilme platziert.

Die Flüssigkristallzellen arbeiten dabei vorzugsweise nach dem VA ("Vertically Aligned", einschließlich MVA = "multidomain VA")-, OCB ("Optically Compensated Bend")- oder TN ("Twisted Nematic", einschließlich STN = "Super Twisted Nematic", DSTN = "Double Layer STN"-Technologie, oder HAN = "Hybrid Aligned Nematic")-Prinzip (das VA-Prinzip wird besonders häufig in grossen TFT-Flüssigkristallanzeigen eingesetzt und ist deshalb besonders bevorzugt), oder auch nach dem IPS-Prinzip ("In Plane Switching" = Feld parallel zur Oberfläche der Anzeige).

Geeignete Anordnungen sind dem Fachmann bekannt, die in der vorliegenden Anmeldung in der Einleitung, in der übrigen Beschreibung oder in den Zeichnungen und Ansprüchen genannten Varianten sind nur exemplarisch zu verstehen und sollen den Umfang der Erfindung nicht beschränken.

Einem optischen Film bzw. einer Kompensationsfolie gemäß der Erfindung können weitere (beispielsweise bei der Herstellung der Lösung oder der Dispersion der Komponenten zugesetzte) Additive zugesetzt werden oder sein, wie Weichmacher, Dispersionsmittel, Pigmente, Farbstoffe (bevorzugt), UV-Absorber, Füllstoffe, anorganische Polymere, organische Polymere, Antischaummittel, Schmiermittel, Antioxidantien (wie gehinderte Phenole, gehinderte Amine, phosphorbasierte Antioxidantien, schwefelbasierte Antioxidantien, Sauerstofffänger oder dergleichen, beispielsweise in einer Menge von 0,1 bis 10 Gew.-%), Säurefänger (z.B. Diglycidylether von Polyglykolen, Metallepoxide, epoxidierte Ether-Kondensationsprodukte, Diglycidylether z.B. von Bisphenol A, epoxidierte ungesättigte Fettsäureester, epoxidierte Pflanzenöle oder dergleichen, beispielsweise in einer Menge von 0,1 bis 10 Gew.-%), Radikalfänger, Mittel zur Erhöhung der elektrischen Leitfähigkeit, Verdickungsmittel, Antibleichmittel, Konservierungsmittel, chemische Stabilisatoren wie sterisch gehinderte Amine (wie 2,2,6,6-Tetraalkylpiperidine) oder Phenole, IR-Absorber, Mittel zur Einstellung des Brechungsindex, gasdurchlässigkeitsvermindernde Agentien, wasserdurchlässigkeitsvermindernde Mittel, antimikrobielle Agentien, Antiblockiermittel (besonders bevorzugt, auch als Mattierungsmittel bezeichnet), welche beispielsweise eine gute Trennbarkeit aufeinandergelegter Schutzfilme ermöglichen, z.B. (Halb-)Metalloxide, wie Siliciumdioxid, Titandioxid, Aluminiumoxid, Zirconiumoxid, Calciumcarbonat, Kaolin, Talkum, kalziniertes Kalziumsilikat, hydratisiertes Kalziumsilikat, Aluminiumsilikat, Magnesiumsilikat oder Kalziumphosphat, kleine anorganische Partikel basierend auf Phosphorsäuresalzen, Kieselsäuresalzen oder Carbonsäuresalzen, oder kleine vernetzte Polymerpartikel, beispielsweise in einer Menge von 0,001 bis 5 Gew.-%, andere als die bereits genannten Stabilisatoren oder dergleichen, oder Mischungen von zwei oder mehr solcher Additive. Dem Fachmann sind derartige Additive für die Zwecke der Herstellung von Kompensationsfolien für Polarisatoren in Flüssigkristallanzeigen geläufig. Die Gesamtmenge aller verwendeten derartigen weiteren Additive liegt vorzugsweise bei 0,1 bis 25 Gew.-%. Gew.-%-Angaben beziehen sich dabei vorstehend jeweils auf die Masse des Kompensationsfolienmaterials.

Als optionale, zusätzliche Weichmacher kommen übliche Weichmacher in Betracht, wie aliphatische Dicarbonsäureester, z.B. Dioctyladipat, Dicyclohexyladipat oder Diphenylsuccinat, Ester und/ oder Carbamate ungesättigter oder gesättigter ali- oder heterocyclischer Di- oder Polycarbonsäuren, wie Di-2-naphthyl-1,4-cyclohexandicarboxylat, Tricyclohexyltricarbamat, Tetra-3-methylphenyltetrahydrofuran-2,3,4,5-tetracarboxylat, Tetrabutyl-1,2,3,4-cyclopentantetracarboxylat, Triphenyl-1,3,5-cyclohexyltricarboxylat, 1,2-Cyclohexandicarbonsäurediisononylester, Triphenylbenzol-1,3,5-tetracarboxylat, phthalsäurebasierte Weichmacher außer denen der Formal I, wie Diethyl-, Dimethoxyethyl-, Dimethyl-, Dioctyl-, Dibutyl-, di-2-ethylhexyl- oder Dicyclohexylphthalat, Bis(2-propylheptyl)phthalat, Dicyclohexylterephthalat, Methylphthalylmethylglykolat, Ethylphthalyl-ethylglykolat, Propylphthalyl-propylglykolat, Butylphthalyl-butylglykolat, Glycerinester, wie Glycerintriacetat, zitronensäurebasierte Weichmacher wie Acetyltrimethylcitrat, Acetyltriethylcitrat oder Acetylbutylcitrat, polyetherbasierte Weichmacher, oder vorzugsweise (wegen verbesserter bis insbesondere hin zu synergistischer Wirksamkeit mit den Weichmachern der Formel I, aber auch aus Gründen der Umweltverträglichkeit und der guten Verarbeitbarkeit, phosphorsäureesterbasierte Weichmacher wie Triphenylphosphat (sehr bevorzugt), Trikresylphosphat, Biphenyldiphenylphosphat, Butylenbis(diethylphosphat), Ethylen-bis(diphenylphosphat), Phenylenbis(dibutylphosphat), Phenylen-bis(diphenylphosphat), Phenylen-bis(dixylenylphosphat), Bisphenol A-diphenylphosphat, Diphenyl-(2-ethylhexyl)-phosphat, Octyldiphenylphosphat oder Triethylphosphat.

Der Gesamtanteil an Weichmacher in einer erfindungsgemäßen Kompensationsfolie liegt, bezogen jeweils auf ihre Masse, vorzugsweise im Bereich von 4 bis 15 Gew.-%, insbesondere im Bereich von 6 bis 13 Gew.-%, beispielsweise bei 8 bis 11 Gew.-%.

UV-Absorber sind aus üblichen UV-Absorbermaterialien ausgewählt, die vorzugsweise im Bereich der UV-A, UV-B und UV-C-Strahlung absorbieren (und vorzugsweise im sichtbaren Bereich oberhalb von 400 nm Wellenlänge der elektromagnetischen Strahlung nicht mehr als 10 % Absorption, vorzugsweise nicht mehr als 0,5 % Absorption, insbesondere nicht mehr als 0.2 % Absorption aufweisen).

Als übliche UV-Absorbermaterialien finden vorzugsweise Tinuvin 326 ® (2-tert-Butyl-6-(5-chloro-benzotriazol-2-yl)-4-methyl-phenol = 2-(5-Chlor(2H)-benzotriazol-2-yl)-4-(methyl)-6-(tert-butyl)phenol = "Bumetrizole") oder Tinuvin 327 ® (2,4-di-tert-Butyl-6-(5-chlorbenzotriazol-2-yl)-phenol), beide von Ciba Specialty Chemicals AG, Basel, Schweiz, Uvinul 3049 ® (2,2-Dihydroxy-4,4-dimethoxybenzophenon; BASF AG, Ludwigshafen, Deutschland), Uvinul D-50 ® (2,2',4,4'-Tetrahydroxybenzophenon; BASF AG) oder Gemische von zwei oder mehr dieser UV-Schutz-Zusätze, oder insbesondere Tinuvin 326 ® alleine Verwendung.

IR-Absorber können einer Kompensationsfolie beigemischt werden zur Anpassung der Retardationswerte bei bestimmten Wellenlängen, beispielsweise in einer Menge von 0.01 bis 5 Gewichtsprozent, vorzugsweise 0.02 bis 2 Gewichtsprozent, sehr bevorzugt von 0.1 bis 0.5 Gewichtsprozent bezogen auf die Masse der Kompensationsfolie. Beispiele für entsprechende IR-Absorber sind anorganische oder vorzugsweise organische IR-Absorber, wie Cyaninfarbstoffe, Metallchelate, Aluminiumverbindungen, Diimmoniumverbindungen, Chinone, Squariliumverbindungen und Methinverbindungen, insbesondere Materialien aus dem Bereich der photosensitiven Materialien aus der Silberhalid-Photographie. IR-Absorber zeigen vorzugsweise eine Absorption im Bereich von 750 bis 1100 nm, insbesondere von 800 bis 1000 nm.

Weitere Kombinationen der Ausführungsformen und Varianten der Erfindung ergeben sich aus den Ansprüchen.

Besonders bevorzugte Ausführungsformen der Erfindung beziehen sich auf optische Kompensationsfolien, welche eine oder mehrere der in den Beispielen genannten Verbindungen der Formel I beinhalten, vorzugsweise mono- oder insbesondere biaxial gereckte Kompensationsfolien, welche insbesondere die vorstehend als bevorzugt genannten Reckungsverhältnisse aufweisen; wobei die Retardationswerte Ro und Rth vorzugsweise auf die vorstehend als bevorzugt genannten Werte eingestellt sind.

Soweit nicht explizit anders vermerkt, sind in der vorliegenden Anmeldung alle angegebenen Werte für Temperaturen, wie zum Beispiel der Schmelzpunkt T(C,N), der Übergang von der smektischen Phase (S) zur nematischen (N) Phase T(S,N) und der Klärpunkt T(N,I), in Grad Celsius (°C) angegeben. Fp. bedeutet Schmelzpunkt, Kp. Klärpunkt. Ferner bedeiten K = kristalliner Zustand, N = nematische Phase, S = smektische Phase und I = isotrope Phase. Die Angaben zwischen diesen Symbolen stellen die Phasenübergangstemperatur in °C dar. Alle Konzentrationen und %-Werte sind in Gewichtsprozent angegeben und beziehen sich auf die jeweilige Gesamtmischung, enthaltend alle festen oder flüssigkristallinen Komponenten, ohne Lösungsmittel.

Der Ausdruck "Halogen" oder "halogeniert" steht für F, Cl, Br und I, besonders für F und Cl und insbesondere für F.

Der Ausdruck "Alkyl" umfasst vorzugsweise geradkettige und verzweigte Alkylgruppen mit 1 bis 15 Kohlenstoffatomen, insbesondere die geradkettigen Gruppen Methyl, Ethyl, Propyl, Butyl, Pentyl, Hexyl und Heptyl. Gruppen mit 2 bis 10 Kohlenstoffatomen sind im Allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind $C_2$ bis $C_7$-1E-Alkenyl, $C_4$ bis $C_7$-3E-Alkenyl, $C_5$ bis $C_7$-4-Alkenyl, $C_6$ bis $C_7$-5-Alkenyl und $C_7$-6-Alkenyl, insbesondere $C_2$ bis $C_7$-1E-Alkenyl, $C_4$ bis $C_7$-3E-Alkenyl und $C_5$ bis $C_7$-4-Alkenyl. Beispiele weiterer bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Alkoxy" umfasst vorzugsweise geradkettige Reste der Formel $C_nH_{2n+1}$-O-, worin n 1 bis 10 bedeuten. Vorzugsweise ist n 1 bis 6. Bevorzugte Alkoxygruppen sind beispielsweise Methoxy, Ethoxy, n-Propoxy, n-Butoxy, n-Pentoxy, n-Hexoxy, n-Heptoxy, n-Octoxy, n-Nonoxy, n-Decoxy.

In der vorliegenden Anmeldung, bedeutet, wenn nicht ausdrücklich anders die Pluralform eines Begriffs sowohl die Singularform als auch die Pluralform, und umgekehrt.

Beschreibung der Zeichnungen:

**Fig. 1** zeigt die Retardationsdispersion für Rth-Werte von TAC mit verschiedenen Konzentrationen der Substanz 7 aus Synthesebeispiel 1 (~75 µm, 15 % gereckt bei 140 °C).
Die Kurven entsprechen den Konzentrationen (von oben nach unten) 0% (reines TAC), 1 %, 2 % und 5 % der Substanz **7**.

**Fig. 2** zeigt die Retardationsdispersion für Ro-Werte von TAC mit verschiedenen Konzentrationen der Substanz **7** (~75 µm, 15 % gereckt bei 140 °C).
Die Kurven entsprechen den Konzentrationen (von oben nach unten) 5%, 2 %, 1 % und 0 % (reines TAC) der Substanz **7**.

**Fig. 3** zeigt die Retardationsdispersion für Rth-Werte von TAC mit verschiedenen Konzentrationen der Substanz **9** aus Synthesebeispiel 3 (~75 µm, 15 % gereckt bei 140 °C).
Die Kurven entsprechen den Konzentrationen (von oben nach unten) 0% (reines TAC), 1 %, 2 % und 5 % der Substanz **9**.

**Fig. 4** zeigt die Retardationsdispersion für Ro-Werte von TAC mit verschiedenen Konzentrationen der Substanz **9** (~75 µm, 15 % gereckt bei 140 °C).
Die Kurven entsprechen den Konzentrationen (von oben nach unten) 5%, 2 %, 1 % und 0 % (reines TAC) der Substanz **9**.

Weitere bevorzugte Verfahrensvarianten lassen sich den Beispielen entnehmen, deren Details - auch verallgemeinert nach allgemeiner Fachkenntnis - repräsentativ für bevorzugte Ausführungsformen des erfindungsgemäßen Verfahren und seiner Produkte sind.

**Beispiele**

Synthesebeispiel 1

Schritt 1.1

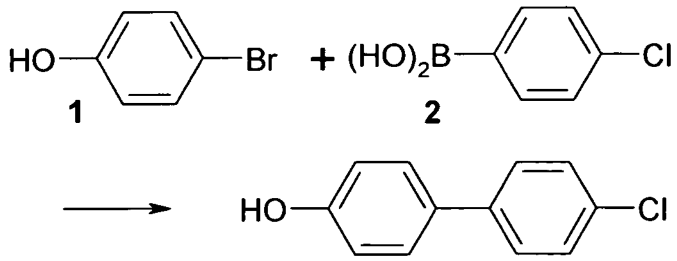

1 2

3

78,3 g (560 mmol) Natriummetaborat-Tetrahydrat werden in 300 ml Wasser vorgelegt und mit 6,45 g (10 mmol) Bistriphenylphosphin-palladium(II)chlorid und 0,5 mol Hydraziniumhydroxid versetzt und 50 min gerührt. Das Reaktionsgemisch wird mit 400 ml THF verdünnt und mit 79,4 g (450 mmol) des Phenols (1) und der Boronsäure (2) versetzt und anschließend 8 h unter Rückfluss erhitzt. Der Ansatz wird auf 1000 ml Methyl-tert-butylether gegeben, die organische Phase abgetrennt und eingeengt. Der Rückstand (3) wird über Kieselgel gegeben (Chlorbutan) und Aus Isooctan/Toluol kristallisiert.

Schritt 1.2

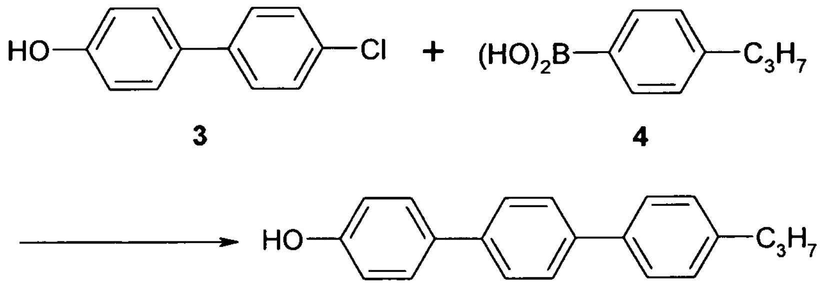

3 4

5

Zu 600 ml Dioxan werden 24,2 g (130 mmol) der Boronsäure (4) 34,6 g (228 mmol), Cäsiumfluorid, 25,9 g (114 mol, 90%ig)) der Chlorverbindung (3) und 4,2 g (5,7 mmol) Bistricyclohexylphosphin-palladium(II)chllorid gegeben und 18h bei 100°C gerührt. Der Ansatz wird bei ca. 60 °C mit 500 ml Methyl-tert-butylether versetzt und mit 10 %-iger Salzsäure hydrolysiert. Die organische Phase wird abgetrennt und eingeengt. Der Rückstand wird über Kieselgel gegeben (Toluol/MTB-Ether 4:1). Das Eluat wird auf -20°C abgekühlt und das Produkt (6) abgetrennt.

Schritt 1.3

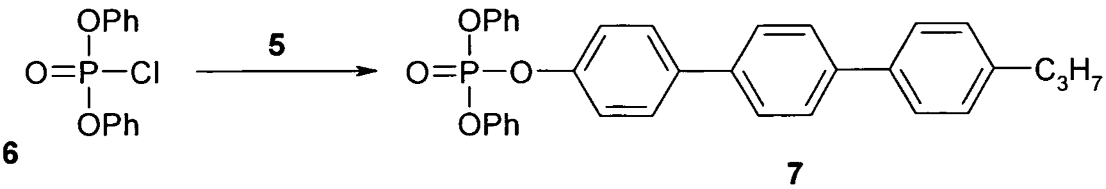

6 5 7

Eine Lösung von 13,3 ml (64,5 mmol) Diphenylchlorophosphat (6) in 1000 ml DCM wird mit 17,0 g (58,7 mmol) des Terphenyls (5) versetzt. Bei 0 - 5 °C werden 15,9 ml (114 mmol) Trethylamin langsam in das Reaktionsgemisch gegeben. Nach 60 h bei Raumtemperatur wird der Ansatz auf 250 ml Wasser gegeben. Die organische Phase wird mit

Wasser gewaschen und eingeengt. Der Rückstand des Produktes (7) wird aus Aceton kristallisiert.
Schmp.: 103 °C

Analog werden die folgenden erfindungsgemäßen Verbindungen hergestellt:

Synthesebeispiel 2

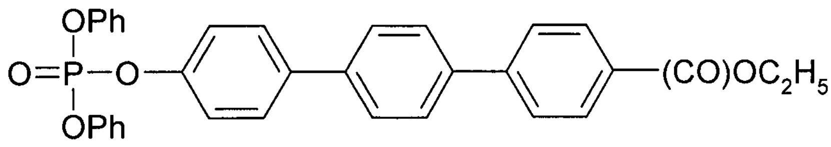

**8**

Schmp.: 115 °C

Synthesebeispiel 3

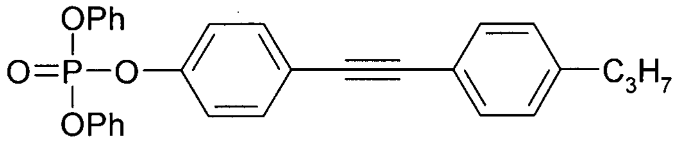

**9**

Schmp.: 74 °C

Synthesebeispiel 4 (nicht anspruchsgemäß)

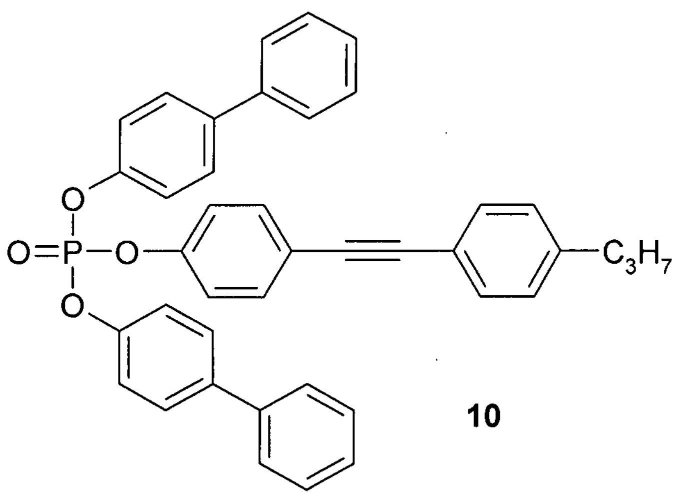

**10**

Schmp.: 126 °C

Anwendungsbeispiele

1. Herstellung von optischen Filmen

Erfindungsgemäße optische Filme, die als Kompensationsfolien zu verwenden sind, und die jeweils eine Verbindung der oben genannten Synthesebeispiele enthalten, werden wie folgt hergestellt:

Zelluloseacetat (Triacetyl-Zellulose, TAC) und das erfindungsgemäße Phophat werden in eine Glasflasche eingewogen. Dieses Substanzgemisch wird unter ständigem Rühren in einem Lösungsmittelgemisch aus 95 Vol% Dichlormethan und 5 Vol% Methanol gelöst. Nachdem die Substanzen vollständig gelöst sind, wird die Lösung kurzzeitig auf ca. 40 °C erhitzt und wieder auf Raumtemperatur abgekühlt. Die Lösung sollte nun keine Luftblasen enthalten und kann mit einem Filmziehrahmen auf eine Glasplatte gezogen werden. Die Dicke des Nassfilmes beträgt ca. 1000 μm (je nach TAC Konzentration und der zu erreichenden TAC Filmdicke). Das Lösungsmittel verdampft und der TAC-Film kann von der Glasplatte abgehoben werden. Es folgt eine Trocknung im Trockenschrank bei 80 °C, um noch evtl. vorhandenes Restlösungsmittel aus dem Film zu entfernen.

2. Lagerstabilität der optischen Filme

Der Film wird über Nacht bei Raumtemperatur gelagert und dann optisch vermessen (Bestimmung des Rth-Wertes). Ein Abschnitt des Filmes wird in einem Klimaschrank bei 60 °C und 95 % relativer Luftfeuchte (rH) gelagert und in Zeitintervallen (bis max 1000 Stunden) hinsichtlich einer Trübung begutachtet. Für die Bestimmung des Ro-Wertes wird ein Filmabschnitt in einer Handreckapparatur uniaxial gereckt (bis max. 1,4 fache Reckung).

Die Retardation Rth sowie die Lagerstabilität der einzelnen, ungereckten Kompensationsfolien sind nachfolgend in Tabelle 1 zusammengefasst (TAC Filmdicke ~ 80 μm, Ro ≈ 0 nm für die ungereckten Filme).

Tabelle 1: Messwerte zu optischen Filmen ohne Recken, 5 % Substanz in TAC.

| Substanz / Synthesebeispiel | Ro (λ = 550 nm) | Rth (λ = 550 nm) | Lagerstabilität bei 60°C / 95% rH |
|---|---|---|---|
| 7 / 1. | 5 nm | -216 nm | > 1000 h |
| 8 / 2. | 4 nm | -188 nm | ~ 120 h |
| 9 / 3. | 3 nm | -182 nm | > 1000 h |
| 10 / 4. | 1 nm | -152 nm | 770 h |

3. Durchführung des Reckens

Die Reckung der Filme wird mit einem Labor-Handgerät (Eigenbau) durchgeführt. Dafür wird der Film an beiden Enden in eine Vorrichtung eingespannt, wobei eine Halterung aus einer Rolle besteht, welche mit Hilfe eines Hebels bewegt werden kann (Rotation). Zwischen den beiden Halterungen befindet sich eine Heizplatte, mit welcher der Film auf eine zuvor eingestellte Temperatur erhitzt wird (typischerweise 120 bis 160 °C). Durch eine Markierung auf dem Film wird die Längenausdehnung bestimmt.

Die Retardationswerte Rth und Ro der Folien nach dem Recken sind in Tabelle 2 dargestellt.

Tabelle 2: Messwerte zu gereckten optischen Filmen, 5 % Substanz in TAC, uniaxial um 20 % bei 160 °C gereckte Filme.

| Substanz / Synthesebeispiel | Ro (λ = 550 nm) | Rth (λ = 550 nm) | Lagerstabilität bei 60°C / 95% rH |
|---|---|---|---|
| **7 / 1.** | 61 nm | -173 nm | > 1000 h |
| **8 / 2.** | 76 nm | -172 nm | ~ 120 h |
| **9 / 3.** | 60 nm | -156 nm | > 1000 h |
| **10 / 4.** | 43 nm | -118 nm | 770 h |

4. Beurteilung der weichmachenden Eigenschaften

Eine weichmachende Wirkung der erfindungsgemäßen Phosphorsäureester kann durch Reckversuche nachgewiesen werden, wobei die Filme uniaxial bis zum Reißen bei 160°C gereckt werden.

Ein 80 μm dicker, reiner TAC Film kann um ca 25 bis 30% gereckt werden, und ein Film mit 5% TPP reißt nach einer Längenausdehnung von ca 40 - 45%, zeigt aber eine starke Trübung (Vergleichsversuche).

TAC Filme mit 5% der erfindungsgemäßen Substanzen 7 und 9 können ca 35 - 40% gereckt werden, sind auch nach dem Reckvorgang klar und zeigen keine Trübung. Daher sind die erfindungsgemäßen Substanzen besonders für höhere Reckraten besser geeignet als das Referenzmaterial TPP.

Die Dispersionseigenschaften der Rth und Ro Retardationen der TAC Filme mit verschieden Konzentrationen der Substanzen 7 und 9 aus den Synthesebeispielen 1 bzw. 3 werden in den Abbildungen Fig. 1 bis 4 gezeigt. Es handelt sich dabei um ca. 75 μm dicke Filme, die bei 140°C um 15 % uniaxial gereckt werden.

Der (ungereckte) reine TAC Film zeigt für die Rth Retardation eine anormale (negative) Dispersion, d.h. der Betrag der Retardation nimmt mit steigender Wellenlänge zu (Fig. 1). Im gereckten Zustand ist das Ro negativ, d.h. die Achse mit dem größeren Brechungsindex ist senkrecht zur Reckrichtung (Fig. 2).

Die Dispersionen der TAC Filme mit den Substanzen 7 und 9 werden bei zunehmender Konzentration verändert und zeigen bei 5% Gehalt eine normale Dispersion, d.h. der Betrag der Retardation (Rth) verkleinert sich bei zunehmender Wellenlänge (Fig. 1 + 3). Die Ro Werte sind positiv, d.h. die langsamere Achse (höher Brechungsindex) entsteht in Reckrichtung (Fig. 2 + 4).

Somit sind die Substanzen sehr gut geeignet, die Dispersionen des TAC Filmes zu beeinflussen und eine Anpassung der Dispersion zu erreichen. Die Werte der Retardationen (Rth und Ro) werden direkt über die Konzentration der Substanzen beeinflusst, ein höherer Gehalt der Substanzen ergibt daher auch höhere Retardationseigenschaften.

## Patentansprüche

**1.** Verbindungen der Formel I:

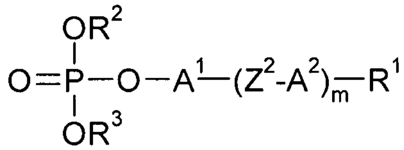

worin

$A^1$ und $A^2$ jeweils unabhängig voneinander einen Rest ausgewählt aus aromatischen oder heteroaromatischen Ringsystemen mit 5 bis 14, vorzugsweise 5 bis 10 Ringatomen, welche auch ein- oder mehrfach durch L substituiert sein können,
L bei jedem Auftreten gleich oder verschieden OH, $CH_2OH$, F, Cl, Br, I, -CN, $-NO_2$, -NCO, -NCS, -OCN, -SCN, $SF_5$, $-C(=O)N(R^0)_2$, $-C(=O)Y^1$, $-C(=O)R^0$, $-N(R^0)_2$, optional substituiertes Silyl, geradkettiges oder verzweigtes Alkyl oder Alkoxy mit 1 bis 25 C-Atomen, oder geradkettiges oder verzweigtes Alkenyl, Alkinyl, Alkylcarbonyl, Alkoxycarbonyl, Alkylcarbonyloxy oder Alkoxycarbonyloxy mit 2 bis 25 C-Atomen bedeutet, worin in allen diesen Gruppen auch ein oder mehrere H-Atome durch F, Cl oder CN ersetzt sein können, und $Y^1$ Halogen bedeutet,
$R^1$ unabhängig voneinander H, geradkettiges oder verzweigtes Alkyl oder Alkoxy mit 1 bis 12 C-Atomen, worin auch eine oder mehrere $CH_2$-Gruppen durch -O-, -S-, -(CO)-, -(CO)O-, -O(CO)-, -O(CO)O-, -CH=CH-, -C≡C-, $-NR^0-$, $-(CO)NR^0-$, $-NR^0(CO)-$ so ersetzt sein können, dass O- und/oder S-Atome nicht direkt miteinander verknüpft sind, und worin auch ein oder mehrere H-Atome durch F, Cl oder CN ersetzt sein können,
$R^0$ H oder $C_1$-$C_7$-Alkyl,
$R^2$ und $R^3$ einen Rest $-A^1-R^1$ bedeuten,
$Z^2$ -C≡C- oder eine Einfachbindung, und
m 2, 3 oder 4, für $Z^2$ = -C≡C- auch m = 1

bedeuten.

**2.** Verbindungen der Formel I nach Anspruch 1, **dadurch gekennzeichnet, dass** m 2 ist.

**3.** Verbindungen der Formel I nach Anspruch 1 oder 2, **dadurch gekennzeichnet, dass** $A^1$ und $A^2$ ausgewählt sind aus der Gruppe bestehend aus 1,4-Phenylen, 1,2-Phenylen und 2,6-Naphthylen, wobei diese Reste unsubstituiert oder durch L ein- oder mehrfach substituiert sein können.

**4.** Optischer Film enthaltend eine oder mehrere Verbindungen der Formel I:

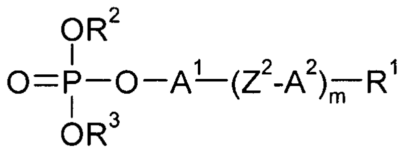

worin
die Bedeutungen der variablen Gruppen nach einem der Ansprüche 1 bis 3 definiert sind.

5. Optischer Film nach Anspruch 4, **dadurch gekennzeichnet, dass** der Gewichtsanteil der Verbindungen der Formel I von 0,1 bis 20 Gewichtsprozent, bezogen auf das Gesamtgewicht des Films, beträgt.

6. Optischer Film nach Anspruch 4 oder 5, **dadurch gekennzeichnet, dass** er eine optische Kompensationsfolie auf Celluloseacylat-Basis ist.

7. Optischer Film nach einem oder mehreren der Ansprüche 4 bis 6, **dadurch gekennzeichnet, dass** er eine Dicke von 20 bis 150 $\mu$m hat.

8. Optischer Film nach einem oder mehreren der Ansprüche 4 bis 7, **dadurch gekennzeichnet, dass** er einen "in plane" Retardationswert Ro von 0 nm bis 70 nm und einen "out of plane" Retardationswert Rth von -30 nm bis -800 nm hat, wobei Ro für den Retardationswert in der Richtung der Ebene und Rth für den Retardationswert in der Richtung der Dicke des optischen Films steht.

9. Verwendung einer oder mehrerer der Verbindungen der Formel I nach einem der Ansprüche 1 bis 3 als Additiv zur Herstellung eines optischen Films.

10. Verfahren zur Herstellung eines optischen Films nach einem oder mehreren der Ansprüche 4 bis 8, **dadurch gekennzeichnet, dass** man mindestens eine der Verbindungen der Formel I mit den Ausgangsmaterialien für den Film vermischt und zu einem Film formt.

11. Polarisatorfilm, **dadurch gekennzeichnet, dass** er mindestens eine optische Kompensationsfolie oder einen Schutzfilm bestehend aus einem optischen Film nach einem oder mehreren der Ansprüche 4 bis 8 aufweist.

12. Flüssigkristallanzeige, welche mindestens einen optischen Film oder einen Polarisatorfilm nach einem oder mehreren der Ansprüche 4 bis 8 oder 11 aufweist.

## Claims

1. Compounds of the formula I:

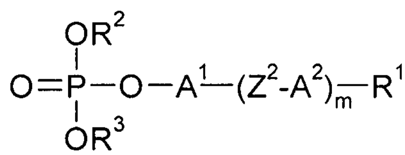

in which

$A^1$ and $A^2$ each, independently of one another, denote a radical selected from aromatic or heteroaromatic ring systems having 5 to 14, preferably 5 to 10, ring atoms, which may also be mono- or polysubstituted by L,
L on each occurrence, identically or differently, denotes OH, $CH_2OH$, F, Cl, Br, I, -CN, $-NO_2$, -NCO, -NCS, -OCN, -SCN, $SF_5$, $-C(=O)N(R^0)_2$, $-C(=O)Y^1$, $-C(=O)R^0$, $-N(R°)_2$, optionally substituted silyl, straight-chain or branched alkyl or alkoxy having 1 to 25 C atoms, or straight-chain or branched alkenyl, alkynyl, alkylcarbonyl, alkoxycarbonyl, alkylcarbonyloxy or alkoxycarbonyloxy having 2 to 25 C atoms, in which, in addition, one or more H atoms in all these groups may be replaced by F, Cl or CN, and $Y^1$ denotes halogen,
$R^1$, independently of one another, denotes H, straight-chain or branched alkyl or alkoxy having 1 to 12 C atoms, in which, in addition, one or more $CH_2$ groups may be replaced by -O-, -S-, -(CO)-, -(CO)O-, -O(CO)-, -O(CO)O-,

-CH=CH-, -C≡C-, $-NR^0-$, $-(CO)NR^0-$, -NR°(CO)- in such a way that O and/or S atoms are not linked directly to one another, and in which, in addition, one or more H atoms may be replaced by F, Cl or CN,
$R^0$ denotes H or $C_1$-$C_7$-alkyl,
$R^2$ and $R^3$ denote a radical $-A^1-R^1$,
$Z^2$ denotes -C≡C- or a single bond, and
m denotes 2, 3 or 4, for $Z^2$ = -C≡C- also m = 1.

2. Compounds of the formula I according to Claim 1, **characterised in that** m is 2.

3. Compounds of the formula I according to Claim 1 or 2, **characterised in that** $A^1$ and $A^2$ are selected from the group consisting of 1,4-phenylene, 1,2-phenylene and 2,6-naphthylene, where these radicals may be unsubstituted or mono- or polysubstituted by L.

4. Optical film comprising one or more compounds of the formula I:

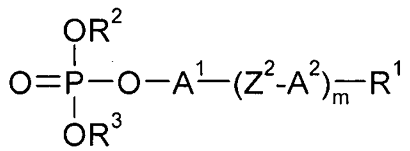

in which
the meanings of the variable groups are defined in accordance with one of Claims 1 to 3.

5. Optical film according to Claim 4, **characterised in that** the proportion by weight of the compounds of the formula I is from 0.1 to 20 per cent by weight, based on the total weight of the film.

6. Optical film according to Claim 4 or 5, **characterised in that** it is an optical compensation film based on cellulose acylate.

7. Optical film according to one or more of Claims 4 to 6, **characterised in that** it has a thickness of 20 to 150 μm.

8. Optical film according to one or more of Claims 4 to 7, **characterised in that** it has an "in-plane" retardation value Ro of 0 nm to 70 nm and an "out-of-plane" retardation value Rth of -30 nm to -800 nm, where Ro stands for the retardation value in the direction of the plane and Rth stands for the retardation value in the direction of the thickness of the optical film.

9. Use of one or more of the compounds of the formula I according to one of Claims 1 to 3 as additive for the production of an optical film.

10. Process for the production of an optical film according to one or more of Claims 4 to 8, **characterised in that** at least one of the compounds of the formula I is mixed with the starting materials for the film and shaped into a film.

11. Polariser film, **characterised in that** it has at least one optical compensation film or a protective film consisting of an optical film according to one or more of Claims 4 to 8.

12. Liquid-crystal display which has at least one optical film or a polariser film according to one or more of Claims 4 to 8 or 11.

**Revendications**

1. Composés de la formule I :

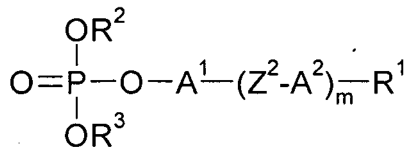

dans laquelle :

$A^1$ et $A^2$ représentent, chacun indépendamment de l'autre, un radical choisi parmi des systèmes de cycle aromatique ou hétéroaromatique comportant 5 à 14, de façon préférable 5 à 10, atomes de cycle, lequel peut également être monosubstitué ou polysubstitué par L,
L représente, pour chaque occurrence, de manière identique ou différente, OH, $CH_2OH$, F, Cl, Br, I, -CN, $-NO_2$, -NCO, -NCS, -OCN, -SCN, $SF_5$, $-C(=O)N(R^0)_2$, $-C(=O)Y^1$, $-C(=O)R^0$, $-N(R^\circ)_2$, silyle en option substitué, alkyle ou alcoxy en chaîne droite ou ramifié comportant 1 à 25 atome(s) de C, ou alkényle, alkynyle, alkylcarbonyle, alcoxycarbonyle, alkylcarbonyloxy ou alcoxycarbonyloxy en chaîne droite ou ramifié comportant 2 à 25 atomes de C, où, en outre, un ou plusieurs atome(s) de H dans tous ces groupes peut/peuvent être remplacé(s) par F, Cl ou CN, et $Y^1$ représente halogène,
$R^1$ représente, indépendamment les uns des autres, H, alkyle ou alcoxy en chaîne droite ou ramifié comportant 1 à 12 atome(s) de C, où, en outre, un ou plusieurs groupe(s) $CH_2$ peut/peuvent être remplacé(s) par -O-, -S-, -(CO)-, -(CO)O-, -O(CO)-, -O(CO)O-, -CH=CH-, -C≡C-, $-NR^0-$, $-(CO)NR^0-$, $-NR^0(CO)-$ de telle sorte que des atomes de O et/ou de S ne soient pas liés directement les uns aux autres, et où, en outre, un ou plusieurs atome(s) de H peut/peuvent être remplacé(s) par F, Cl ou CN,
$R^0$ représente H ou $C_1$-$C_7$-alkyle,
$R^2$ et $R^3$ représentent un radical $-A^1-R^1$,
$Z^2$ représente -C≡C- ou une liaison simple, et
m représente 2, 3 ou 4, pour $Z^2$ = -C≡C- également m = 1.

2. Composés de la formule I selon la revendication 1, **caractérisé en ce que** m est 2.

3. Composés de la formule I selon la revendication 1 ou 2, **caractérisé en ce que** $A^1$ et $A^2$ sont choisis parmi le groupe constitué par 1,4-phénylène, 1,2-phénylène et 2,6-naphtylène, où ces radicaux peuvent être non substitués ou monosubstitués ou polysubstitués par L.

4. Film optique comprenant un ou plusieurs composé(s) de la formule I:

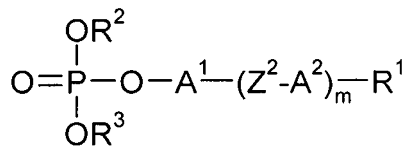

dans laquelle :
les significations des groupes variables sont définies selon l'une des revendications 1 à 3.

5. Film optique selon la revendication 4, **caractérisé en ce que** la proportion en poids des composés de la formule I est de 0,1 à 20 pourcent en poids, sur la base du poids total du film.

6. Film optique selon la revendication 4 ou 5, **caractérisé en ce qu'**il s'agit d'un film de compensation optique basé sur de l'acylate de cellulose.

7. Film optique selon une ou plusieurs des revendications 4 à 6, **caractérisé en ce qu'**il présente une épaisseur de 20 à 150 μm.

8. Film optique selon une ou plusieurs des revendications 4 à 7, **caractérisé en ce qu'**il présente une valeur de retardement "dans le plan" Ro de 0 nm à 70 nm et une valeur de retardement "hors du plan" Rth de -30 nm à -800 nm, où Ro représente la valeur de retardement dans la direction du plan et Rth représente la valeur de retardement dans la direction de l'épaisseur du film optique.

**9.** Utilisation d'un ou de plusieurs des composés de la formule I selon l'une des revendications 1 à 3 en tant qu'additif pour la fabrication d'un film optique.

**10.** Procédé pour la fabrication d'un film optique selon une ou plusieurs des revendications 4 à 8, **caractérisé en ce qu'**au moins l'un des composés de la formule I est mélangé avec les matériaux de départ pour le film et est conformé selon un film.

**11.** Film de polariseur, **caractérisé en ce qu'**il comporte au moins un film de compensation optique ou un film de protection constitué par un film optique selon une ou plusieurs des revendications 4 à 8.

**12.** Affichage à cristaux liquides, lequel comporte au moins un film optique ou un film de polariseur selon une ou plusieurs des revendications 4 à 8 ou 11.

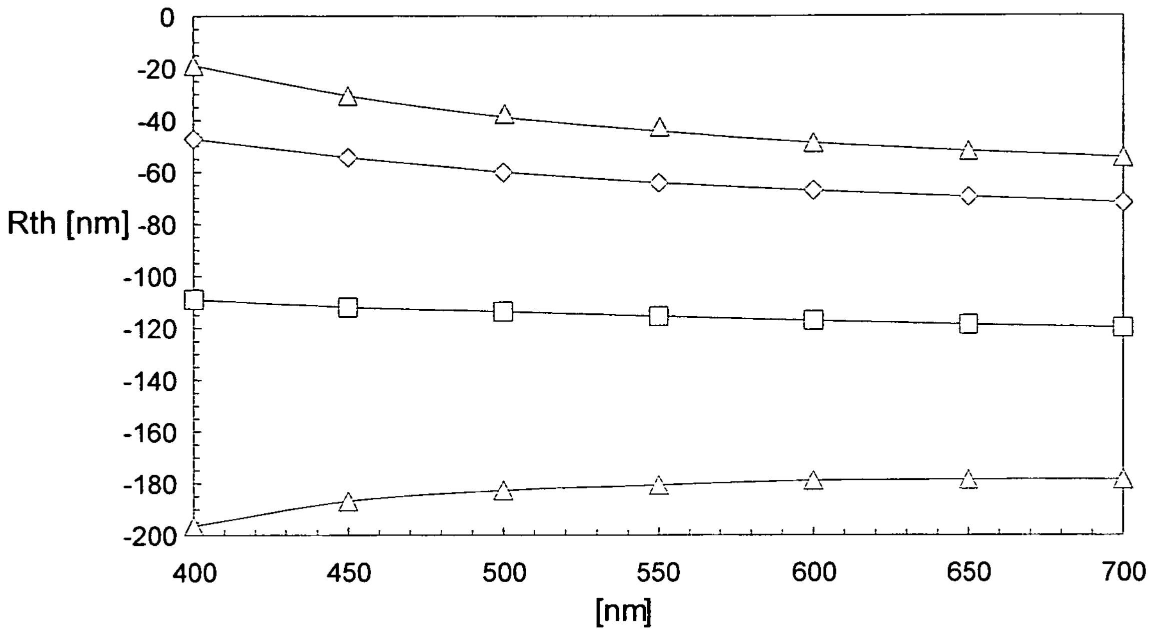
0
-20
-40
-60
Rth [nm]
-80
-100
-120
-140
-160
-180
-200
400
450
500
550
600
650
700
[nm]

**Fig. 1**

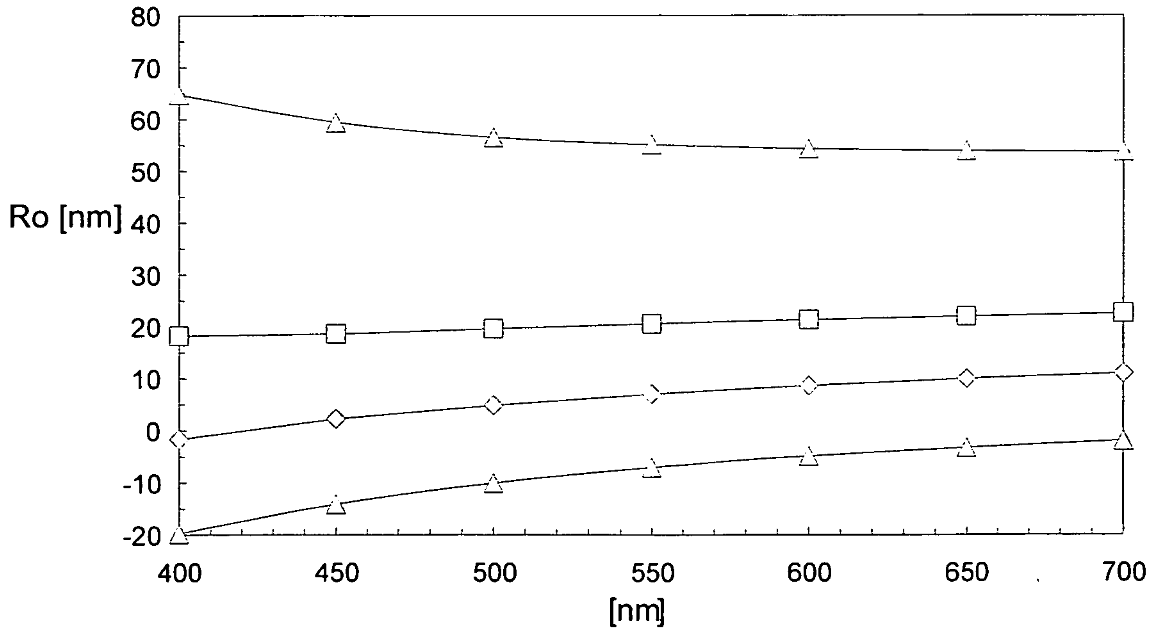
80
70
60
50
Ro [nm]
40
30
20
10
0
-10
-20
400
450
500
550
600
650
700
[nm]

**Fig. 2**

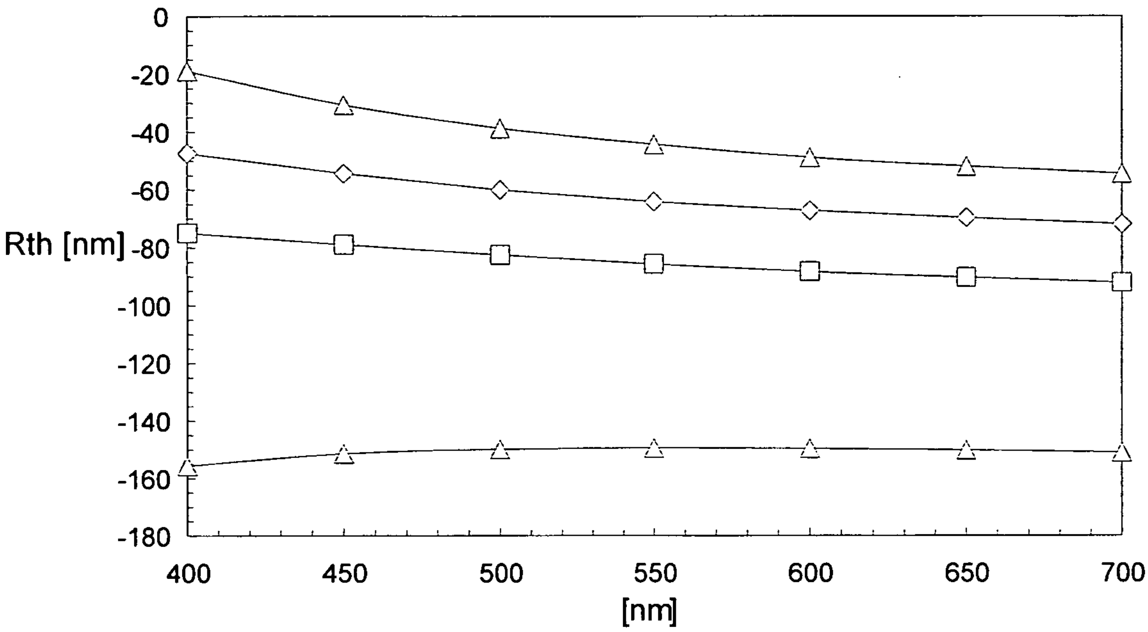
0
-20
-40
-60
Rth [nm]
-80
-100
-120
-140
-160
-180
400
450
500
550
600
650
700
[nm]

**Fig. 3**

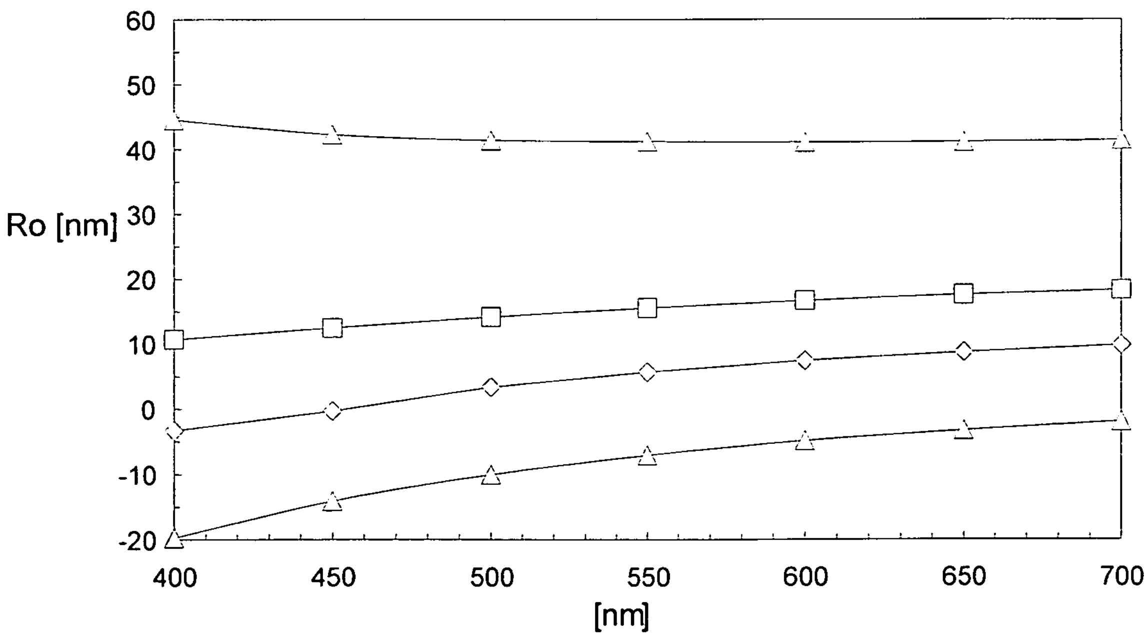
60
50
40
Ro [nm]
30
20
10
0
-10
-20
400
450
500
550
600
650
700
[nm]

**Fig. 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 463467 A
- WO 2007023430 A
- US 6778242 B
- US 6559912 B
- US 20030218709 A
- EP 2218763 A2
- JP 03204888 A
- JP 03190889 A
- EP 2218763 A
- US 20050045064 A1

### In der Beschreibung aufgeführte Nicht-Patentliteratur

- **A. UCHIYAMA ; T. YATABE.** Control of Wavelength Dispersion of Birefringence for Oriented Copolycarbonate Films Containing Positive and Negative Birefringent Units. *J. Appl. Phys.,* 2003, vol. 42, 6941-6945